Europäisches Patentamt

European Patent Office

Office européen des brevets

(11) Publication number: **0 251 584**
**A2**

## EUROPEAN PATENT APPLICATION

(21) Application number: 87305416.7

(22) Date of filing: 18.06.87

(51) Int. Cl.4: **G06F 9/46**

(30) Priority: 26.06.86 CA 512479

(43) Date of publication of application:
07.01.88 Bulletin 88/01

(84) Designated Contracting States:
AT DE FR GB IT NL SE

(71) Applicant: NORTHERN TELECOM LIMITED
600 de la Gauchetiere Street West
Montreal Quebec H3B 4N7(CA)

(72) Inventor: Goyer, Pierre
32 Terasse David
Gatineau Quebec J8V 1G4(CA)
Inventor: Selic, Branislav Vladeta
7 Whelan Drive
Nepean Ontario K2J 2A3(CA)

(74) Representative: Crawford, Andrew Birkby et al
A.A. THORNTON & CO. Northumberland
House 303-306 High Holborn
London WC1V 7LE(GB)

(54) A synchronization service for a distributed operating system or the like.

(57) A synchronization service which can be incorporated into a distributed operating system as a shared service. It allows the realization of different custom-built synchronization strategies for different applications. This approach is based on defining a general set of application-independent synchronization primitives. These are provided by the distributed operating system in the form of a synchronization service. By themselves the individual primities are insuffient to provide synchronization. However, they can be combined in different ways to realize customized synchronization strategies. This leaves the ultimate responsibility for synchronization with the application, but in a much simplified form. Application programs can combine these primitives to construct the most suitable form of synchronization.

# A SYNCHRONIZATION SERVICE FOR A DISTRIBUTED OPERATING SYSTEM OR THE LIKE

This invention relates generally to the field of computers, and more specifically to a synchronization service for use with computers.

## Background of the Invention

As computing tasks increase in size and complexity, one approach to speed up the execution of these tasks is to use distributed programs. A distributed program can be defined as a computer program which is partitioned into multiple concurrent components which execute on separate processing sites which do not share a common memory.

In this context, the term "program" is used to imply a global objective (i.e. common goal). Each component (or portion) of the program performs some portion of the overall activity required to attain this common goal. Thus, a distributed program represents a set of (functionally) tightly-coupled components operating in a (physically) loosely-coupled environment.

Asynchronous operation of concurrent cooperating activities results in the time-dependencies and race conditions which can lead to errors. For example, two processes attempting to simultaneously update a shared variable may interfere with each other so that an incorect value is assigned to the variable. The solution to such problems is through synchronization. Synchronization can be defined as the organization of actions and interactions of a system of concurrent asynchronous entities for the purpose of achieving some common objective.

One example of a distributed computer system is the case of a replicated database where each copy of the database is on a separate processing element. When a change is made to one copy then this change must be propagated to all the others if consistency is to be maintained. This involves synchronization. The situation may be complicated further if two or more conflicting changes are initiated simultaneously on different copies. In that case synchronization is required not only to ensure that all copies end up in the same state but also that the resulting state is valid. Other situations where synchronization is necessary include the restoration of the current state to new or recovering copies and the handling of failures.

Distributed synchronization can also be useful in standby schemes where redundant components are configured for greater system availability. In this case the compnoents have to agree as to which will be the active and which the standby components and must also arrange for proper switchover in case of failures.

The cited examples illustrate the diverse ways in which synchronization is used in distributed systems. As can be expected, different applications can have different demands on synchronization: some may require fast response while others may place more emphasis on reliability and fault tolerance. This indicates that the choice of the most suitable synchronization technique and tis implementation can only be made if the particular needs of the application are considered.

Unfortunately, in a large system supporting many different types of distributed application programs, leaving synchronization entirely to the application program could result in excessive duplication of effort, unreliable design, and suboptimal utilization of resources. Even worse, perhaps, is the possibility that the relatively complex issue of synchronization could dominate the design to such an extent that functional concerns are neglected. From that point of view a trusted, system-based, synchronization facility is preferred.

There are several important characteristics of distributed programs which make them significantly more difficult to design and implement compared to conventional non-distributed programs:

(1) Concurrent execution. This means that there is no single sequential control thread such as represented by the execution trace of a non-distributed program. Concurrency introduces timing dependencies among the system components which can lead to deadlocks or instability.

(2) Significant communication delays. The exchange of information between components of a distributed program involves non-negligible and randomly-distributed transmission delays. If these delays are comparable to the rate at which the components change state, the system may become unstable.

(3) Partial failure modes. Failures of distributed components require complex detection and recovery algorithms which are difficult to design and verify. Two types of partial failures exist:

- Communication path failures can result in the duplication, temporal reordering, or total loss of information being exchanged; and

-Processing component failures (hardware and software) lead to temporary loss of functionality.

The recovering action for each type of failure is quite different. Unfortunately, It is often difficult to distinguish them on the basis of the observed symptoms.

From the definition of synchronization it can be seen that the need for synchronization is determined by the shared objective of the cooperating distributed entities. This common objective places interdependencies on the individual entities so that a change in the state of one necessitates appropriate changes (reactions) in others. This can be expressed as a requirement to preserve certain application-dependent state consistency constraints. The problem of maintaining consistency is further complicated by the fact that each entity, in addition to internal interactions, is also exposed to independent interactions with the environment. (The environment consists of other distributed components which do not share the same objective as the synchronized system, but which use it for their own purposes). This means that the stimulus to change state can occur simultaneously in two or more synchronized entities. The synchronization problem can then be viewed as one of ordering concurrent interdepenent activities.

The simplest form of ordering which guarantees consistency is serialization: the execution of activities one at a time. Although synchronization strategies exist which are not based on serialization, they will not be considered here due to their relative complexity.

Two basic, and not necessarily exclusive, classes of strategies exist for achieving serialization in distributed systems;

(1) Centralized strategies.

In this case, the ordering of activities is performed by a unique distinguished entity. Synchronized entities, with externally induced work requests, first approach the distinguished entity for permission. This entity resolves concurrent requests by granting a right to only one of the competing entities. When that entity completes its work, the right is granted to another entity, and so on.

A major feature of this type of scheme is that there is a single point of control. This allows the implementation of relatively complex yet reliable and efficient scheduling algorithms. Examples of centralized strategies can be found in A Decentralized Control Method in a Distributed System by J.P. Cabanel et al, Proceedings 1st Ceonference, Distributed Proc. Systems, Huntsville, Al, 1979 and in A Failure Tolerant Centralized Mutual Exclusion Algorithm by G. N. Buckley et al, Proceedings 4th Conference, Distributed Computer Systems, San Francisco, Ca. 1984.

(2) Distributed strategies.

In this case, there is no central scheduler. Instead, ordering is accomplished through distributed agreement. Key to this scheme is a shared "clock" (logical or physical). This is generally a monotonically increasing numeric variable which is maintained consistently by all the synchronized entities. Work requests are timestamped with the clock value at the time of arrival and then processed in order. However, because two or more requests can be concurrent (i.e., they have the same timestamps), ties are resolved through group negotiation: a new work request is first broadcast to all other entities which respond either with a simple acknowledgement or a work request of their own. Once an entity is aware of all concurrent work requests within the group, it orders them according to some tie-breaking rule and then processes them. Since each entity uses the same ordering algorithm each will perceive the same sequence of events as all the others.

The distinguishing feature of distributed strategies is that operation does not depend on a single critical entity at any time. This makes them very fault-tolerant. However, they are generally less efficient than centralized strategies when the number of entities to be synchronized is large. Examples of distributed strategies can be found in Time, Clocks, and the Ordering of Events in a Distributed System by L. Lamport, Comm. ACM, (21,7), July 1978, in An Algorithm for Maintaining the Consistency of Multiple Copies by D. Herman et al, Proceedings, 1st Conference Distributed Proc. Systems, Huntsville, Al., 1979 and in Synchronization in Distributed Programs by F.B. Schneider, ACM Transactions on Prog. Lang. & Syst, (4,2), April, 1982.

Combinations of these two forms, such as the circulating sequencer proposed in Algorithms for Distributed Data Sharing Systems Which Use Tickets by G. Le Lann, Proc. 3rd Berkeley Workshop on Dist. Data, Aug. 1978, are possible. In that - scheme, a centralized controller is used to control the clock used for timestamping. (Although the controller function is circulated among the distributed entities, at any given time it is performed by only one entity.) The ordering of activities is then done in a distributed fashion, based on timestamp values and a tie-breaking rule.

The following patents depict examples of distributed processing in general, and attention is directed to them. U.S. patent 3,411,139 dated November 12, 1968 by J.T. Lynch et al; U.S. patent 3,631,405 dated December 28, 1971 by G.S. Hoff et al; U.S. patent 3,771,137 dated November 6, 1973 by R.P. Barner et al; and U.S. patent 4,115,866 dated September 19, 1978 by J.L.G. Janssens et al.

Summary of the Invention

One objective of the Synchronization Service of the present invention is to provide a set of application-independent capabilities which would allow the construction of specific synchronization strategies belonging to the categories listed above. To do this it must incorporate the essential abstract features of those strategies. These are defined in the form of a general synchronization paradigm described in a following section.

Because of concurrent execution and the possibility of partial failures, it is necessary to closely synchronize the operation of the distributed components of a program. Synchronization can be defined as the ordering of actions and interactions of components in a distributed program so that the state of each component remains consistent with the common goal.

Experience with concurrent systems has shown that the synchronization problem is difficult to solve even for non-distributed situations; the number of possible component interactions is usually very large, increasing the probability of a design error.

A further difficulty is caused by the fact that no single synchronization strategy is adequate for all distributed programs. If multiple distributed programs are to be supported on a system, this means that the synchronization problem may have to be solved in many different ways.

Given the diversity of synchronization strategies and the difficulty of implementing them, is it possible to provide some assistance to designers of distributed programs to increase the reliability of their designs?

The approach to this problem, presented by the present invention, consists of providing a set of primitive synchronization operators at the level of a distributed operating system. Such operators can be used to construct more complex forms of synchronization customized to different applications. This approach has the following advantages:
-It provides a one-time trusted implementation of common mechanisms;
-It does not favour any particular synchronization strategy which would favour some applications but penalize others;
-It provides a systematic framework (programming model) for designing and implementing distributed programs.

The operating system component which implements the synchronization primitives (operators) is called the Synchronization Service.

The essential idea behind the Synchronization Service is that the synchronization problem can be tackled hierarchically. Each level in the hierarchy may have different synchronization mechanisms based on the synchronization facilities of the levels below. The lower levels of this hierarchy can be designed to be application-independent and can therefore be provided as a reliable system service. This, in turn, increases the reliability of programs and reduces development time.

This approach to distributed synchronization attempts to decompose the synchronization problem. At the lowest level of decomposition a general set of application-independent synchronization primitives is defined. These are provided by the distributed operating system in the form of a synchronization service 10. By themselves the primitives are insufficient to provide synchronization. However, they can be combined in different ways to realize customized synchronization strategies. This leaves the ultimate responsibility for synchronization with the application program, but in a much simplified form. The role of the synchronization service 10 is to hide many of the more basic housekeeping functions inherent in distributed synchronization. For instance, all fault-tolerant synchronization schemes require a monitoring function to keep track of the operational status of all relevant distributed components. The present invention consolidates such a function as a system service where it can be shared by many application programs.

Stated in other terms, the present invention is a general service, provided within a distributed operating system, which can be used by application and system programs to implement synchronization between program components that are physically distributed.

Stated in other terms, the present invention is a synchronization service for use with a computer having a distributed operation system, to allow the construction of a customized synchronization - scheme, for synchronizing the constituent portions of a distributed program, the service comprising: a general set of application-independent synchronization primitives, whereby the construction of the customized synchronization scheme is achieved by the selective implementation of the application-independent synchronization primitives.

Stated in yet other terms, the present invention is a synchronization service for use with a computer having an operating system distributed over a plurality of processing elements, to allow the construction of a customized synchronization scheme, for synchronizing the constituent components of a distributed program, the service comprising the steps of:

a) joining a program component on a fist processing element to a group of existing program components on at least a second processing element so that each of the existing components is aware of the present and location of the joining components;

b) informing each member of the group of physically distributed program components when one or more components which are members of the group, depart from it;

c) selecting, as a distinguished member, one program component from a group of distributed program components such that, within the group, there is never more than one distinguished member; and

d) providing mutually exclusive rights to the group of distributed program components such that no more than one component can appropriate a given right at any time.

Stated in still other terms the present invention is a synchronization service, for use with a computer having an operating system distributed over a plurality of processing elements, to allow the construction of customized synchronization schemes for synchronizing the constituent components of a distributed program, the service including a synchronization master control comprising: master control means for activating the synchronization service; polling means for polling the processing elements associated with the components of the distributed program so as to monitor the status of the processing elements; control means for joining new members to the group, and for handling departures of members from the group; and a database means containing information representative of the current state of the synchronization service at a given point in time.

Brief Description of the Drawings

The present invention will now be described in more detail with reference to the accompany drawings, wherein like parts in each of the several figures are identified by the same reference character, and wherein:

Figure 1 depicts a simplified block diagram of the synchronization service of the present invention;

Figure 2a is similar to Figure 1 but is for one specific embodiment thereof;

Figure 2b is a variation on the embodiment of Figure 2a;

Figure 2c is similar to Figure 2b;

Figure 3a is a chart depicting the primitives and corresponding replies employed by the invention;

Figure 3b is a symbolic representation of the constituent tasks of synchronization master control of Figure 1;

Figure 3c is a symbolic representation of the constituent tasks of member agent 11 of Figure 1;

Figure 4 is a simplified functional flow diagram for a database;

Figure 5 is a simplified functional flow diagram for a database;

Figures 6 to 8, 9a, 9b, and 10 to 13 inclusive represent action sequences helpful for understanding the operation of the present invention; and

Figure 14 is a simplified representation of the useage dependencies helpful in understanding the operation of the present invention.

Detailed Description

Synchronization service 10 is based on a general distributed program paradigm. This paradigm is represented by the concept of synchronization groups. A synchronization group is a set of distributed program components called "members", and referred to by the reference character 18, which cooperate to achieve a common objective. Note that members 18 are not a part of synchronization service 10, but they use synchronization service 10.

In other words, the distributed operating system 15, to which synchronization service 10 is applied, will support both distributed application programs and distributed system programs. Both the distributed application and system programs consist of several program components (called members 18) which in turn consist of subcomponents called tasks. In synchronization service 10 there is one synchronization group for each distributed application or system program.

A primitive synchronization operator has effect only within the domain of a particular synchronization group. Synchronization groups, therefore, encapsulate units of tightly coupled distributed functionality. Of course, synchronization service 10 allows many synchronization group to coexist on a single distributed operating system 15.

The basic construct of synchronization service 10 is the synchronization group representing a set (i.e., a system) of distributed entities which are tightly coupled to each other in some way. The state and action dependencies which bind these entities are not specified at this level so that synchronization groups are decoupled from application semantics.

Formally, a synchronization group is a set of components, called members 18, in which each group ideally has the following properties:

(1) Uniqueness: There can be any number of synchronization groups in a larger system but each synchronization group is distinguished from all others by a unique synchronization gruop identifier.

(2) Physical distribution: Each member of a synchronization group exists on a different processing element 12. (This is simply a matter of convenience: extending the concept of synchronization groups to logically distributed entities is possible). Note that there are no restrictions concerning the number of synchronization groups which may have members 18 on a particular processing element 12. This means that two or more synchronization groups can overlap in physical space.

(3) Reliable communication: Communication between any pair of members 18 is non-lossy, non-duplicating, and order-preserving. Furthermore, full connectivity is assumed; i.e., each member 18 can communicate directly with all other members 18. If the physical system does not have these properties then it is assumed that an underlying communication service exists which provides them. The intent here is to isolate communications issues from synchronization issues.

(4) Dynamic behavior: Members 18 can depart or join the synchronization group at any time and independently of each other. (The group exists as long as at least one member 18 exists.) Departures may be either application-driven or due to processing element 12 failure. This property captures the dynamic nature of real-world components.

(5) Mutual exclusion: Each synchronization group maintains a set of shared objects called rights, each of which can be either free or associated with at most one member 18. They are functionally equivalent to semaphores (reference: E.W. Dijkstra, Cooperating Sequential Processes, Technical Report EWD-123, Technological University, Eindhoven, 1965) but for a distributed environment. (However, a member 18 can hold more than one right at a time.) A departing member 18 cannot abscond with a right since any rights it holds are automatically freed. In essence, rights are a general mechanism for distinguishing between group members 18. The assignment of functional significance to rights is up to the application.

(6) Distinguished member: One and only one member 18 of every synchronization group is designated as its distinguished member. The appointment is made at random and is transferred to another member 18 if the current distinguished member 18 departs. This property is intended to serve those synchronization strategies which require a central coordinator although synchronization service 10 makes no assumptions regarding the functional significance of the distinguished member 18. (Note that the distinguished member feature is simply a special case of the mutual exclusion property but has been singled out purely for convenience.) Since the selection and preservation of a distinguished member 18 is by synchronization service 10, application programs need not implement their own election algorithms.

A synchronization group represents a unit of synchronization. The facilities of the synchronization service 10 (described later) are all limited in scope to the respective synchronization group.

The synchronization problem is often formulated as a problem of maintaining data consistency in a dynamic environment. From that point of view, the synchronization service 10 ensures consistency of the folowing information sent to members 18:

(1) current membership list;

(2) the identity of the distinguished member; and

(3) the status of all group rights.

This information is maintained consistently and correctly in the face of continual departures and arrivals of members 18.

The concept of synchronization groups does not encompass application program-level consistency; that is the responsibility of the application program. Instead, a synchronization group maintains a consistent view (on all its members 18) concerning the status of its objects: the list of active members 18, the status of rights, the distinguished member designation. These responsibilities are therefore removed from the view of the application program.

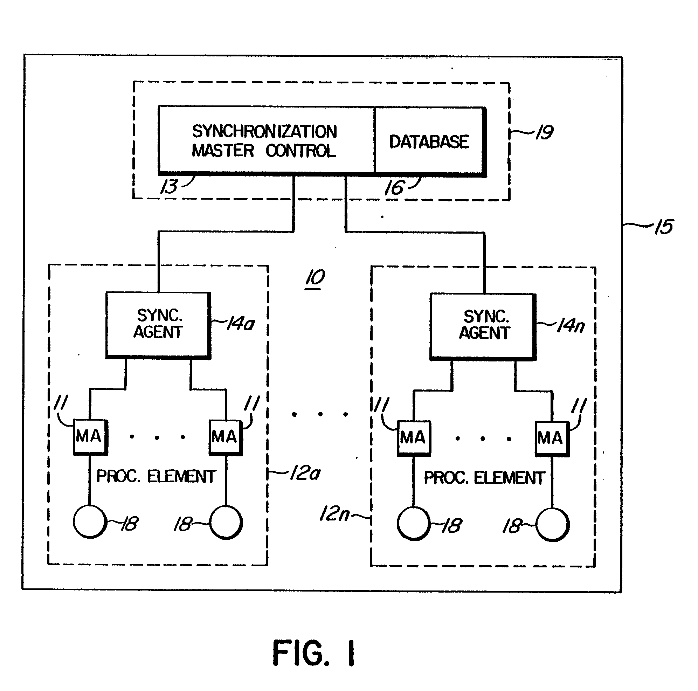

Figure 1 depicts a simplified block diagram of synchronization service 10 of the present invention. A distributed application program, structured as a synchronization group, typically has members 18 (i.e. distributed program components) which are physically distributed across two or more processing elements 12a....12n (referred to collectively as processing elements 12). In the implementation of Figure 1, the structure of synchronization service 10 matches the structure of the synchronization group by providing a local synchronization controller, i.e. member agent 11, for each group member 18. Thus, there is a separate implementation of synchronization service 10 for each application program; note, however, that there is only one synchronization master control 13 regardless of how many implementations, and only one synchronization agent 14 per processing element 12. Each implementation is functionally independent of the others.

Note that the group of processing elements 12 together with processing element 19 form part of the distributed computing environment (i.e. distributed operating system 15) which synchronization service 10 is designed to synchronize. Not also that each processing element 12 may have a plurality of member agents 11, and that processing element 19 may be combined with one of the processing elements 12.

Member agents 11 provide the main interface to the synchronization service 10. Application program components (i.e. members 18) initiate synchronization activities by invoking the desired synchronization primitives (to be described later). This is communicated to the local member agent 11 which then interacts with other member agents 11 in order to effect the specified synchronization function. The member agent 11 also informs the members 18 of synchronization requests initiated by other members 18 as well as group events such as the failure of active members 18 and the joining of new ones.

Member agents 11 are dynamic entities which follow the dynamics of the application programs they serve. A member agent 11 is created (by the local synchronization agent 14) when an application program component (i.e. member 18) requests to be synchronized with other members 18 in a synchronization group. It is destroyed when the member 18 is unsynchronized.

To ensure coherent behaviour of synchronization service 10, control of the individual implementations of the service 10 is centralized. This is done through a three-level hierarchy with a unique master controller at the top (i.e. synchronization master control 13), an intermediate layer of controllers in the middle (i.e. synchronization agents 14a to 14n, referred to collectively as synchronization agents 14), and a layer of member agents 11 at the bottom. This hierarchy allows a decomposition of the control problem into smaller more comprehensive subproblems. Note from Figure 1 that there is one synchronization agent 14 for each processing element 12, and it controls all the member agents 11 in that processing element 12.

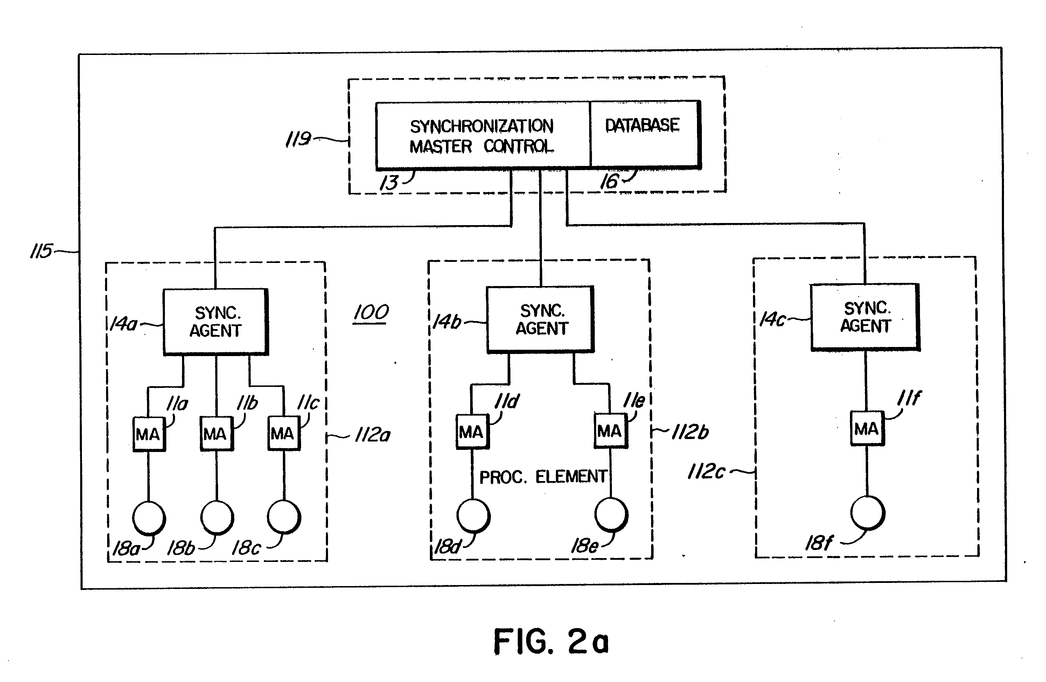

Figure 2a is similar to Figure 1, but depicts a specific embodiment of the synchronization service, referred to by reference character 100 as applied to distributed operating system 115. In Figure 2a there is a synchronization master control 13 on processing element 119, three processing elements 112a, 112b, and 112c, three synchronization agents 14a, 14b, and 14c, along with six members 18a to 18f along with their corresponding member agents 11a to 11f respectively. In the distributed computing example of Figure 2a, processing elements 112a, 112b, 112c and 119 are each an IBM PC-AT. Note that the members 18a to 18f inclusive are not part of synchronization service 100 while everything else shown in Figure 2a is. Members 18a to 18f inclusive use the synchronization service 100. Note also that there is another synchronization master control (not shown) on standby.

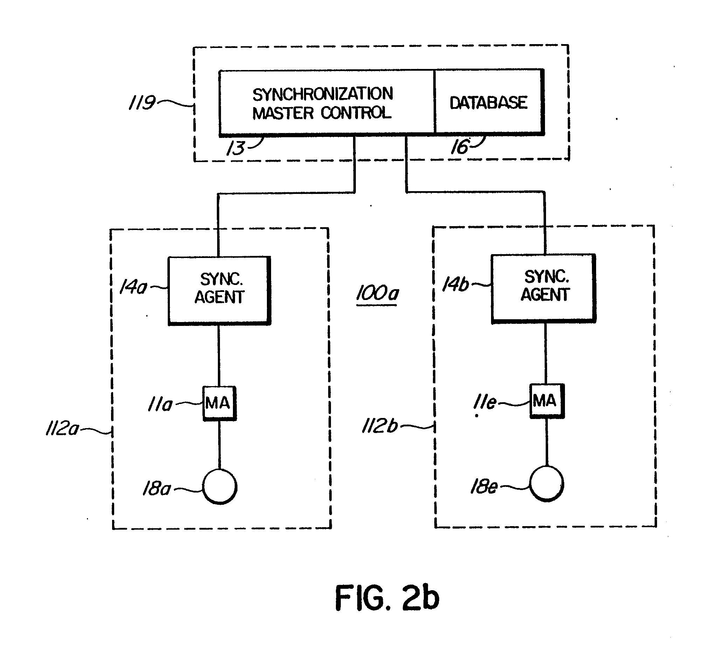

Figure 2b is similar to Figure 2a, but is further simplified and depicts only those items that constitute one implementation of synchronization service 100 (i.e. implementation 100a). That is, members 18a and 18e (Figures 2a and 2b) form one synchronized group. Members 18b, 18c, 18d, and 18f (Figure 2a) form at least one other synchronized group.

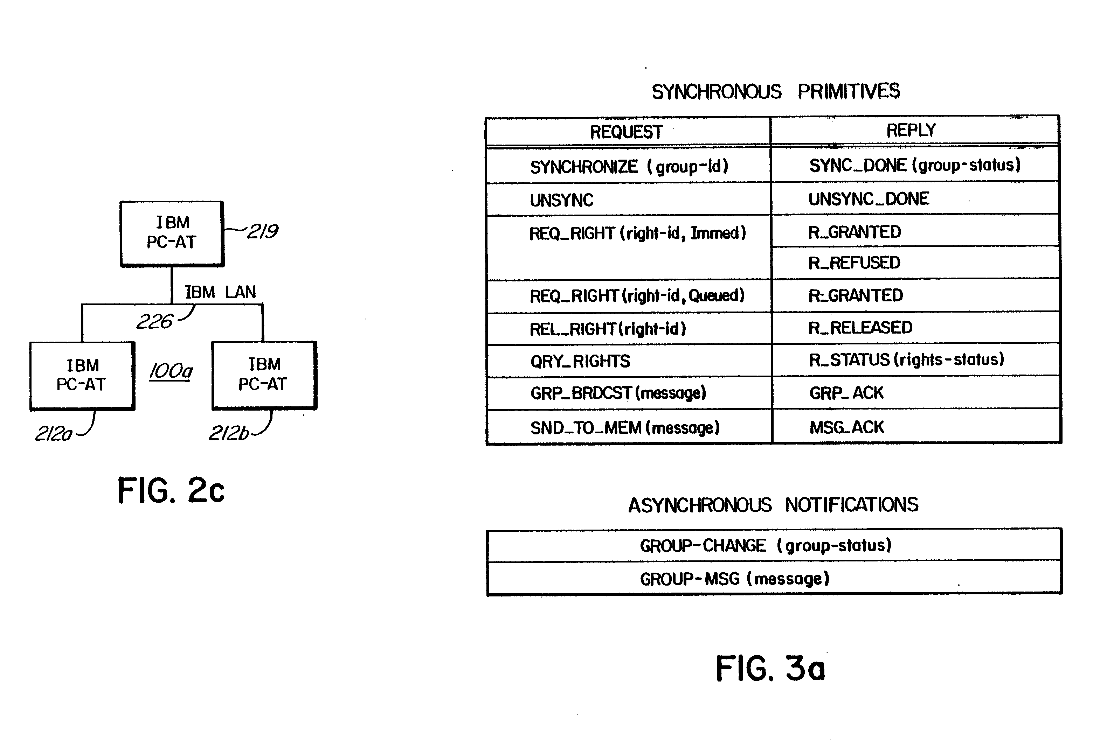

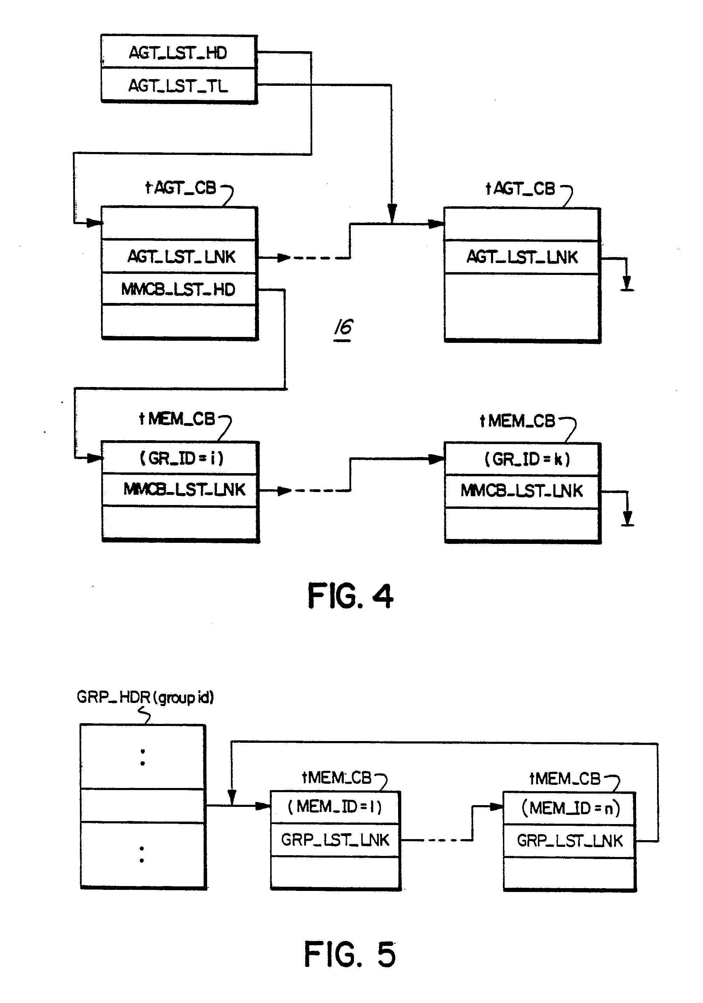

Figure 2c is a simplified application to exemplify synchronization service 100a of Figure 2b. In Figure 2c the hardware implementating synchronization service 100a is a group of IBM personal computers of the AT series, linked by an IBM LAN (local area network) 226. That is, processing element 112a is an IBM PC-AT computer 212a, processing element 112b is an IBM PC-AT computer 212b, and processing element 119 is an IBM PC-AT computer 219.

In Figure 2c, computer 212a is a telephone operator's workstation as is computer 212b. The application in Figure 2c is to maintain a telephone directory and to allow the user at both computers 212a and 212b to have access to the telephone directory, to access it to determine an individual's telephone number, and to be able to update the telephone directory as changes occur. Computer 219, in this example, handles the tasks of synchronization master control 13 and database 16 (Fig. 2b)

Returning now to the general case of Figure 1, the role of synchronization master control 13 is to provide internal synchronization between the components of the local synchronization service 10. In essence, it performs those functions where a consistent (but not necessarily correct) view of the system 15 is required. More precisely, synchronization master control 13 is responsible for:

(1) <u>Activation of synchronization service 10.</u>

This is done by activating the synchronization agents 14 as the processing elements 12 are restarted.

## (2) Monitoring of processing elements 12.

This function involves observing (polling) the status of all processing elements 12 by communicating with local synchronization agents 14. Any changes in these states are detected by synchronization master control 13 and appropriate notifications are dispatched to the synchronization service components affected by the change.

## (3) Management of synchronization groups.

synchronization master control 13 is the central arbiter for all synchronization groups in the local synchronization service 10. It is involved in handling transient conditions which occur in group operation:
-group establishment,
-joining of new members 18, and
-departures of joined members 18.
Note that synchronization master control 13 does not participate in the steady-state operation of synchronization groups and, consequently, is not normally a performance bottleneck.

Synchronization master control 13 must be highly fault-tolerant since synchronization service 10 may be used to implement standby schemes by applications. For that reason it is backed up by at least one other instance operating in standby mode. If the currently active synchronization master control 13 fails, the standby will take its place. Because this is the Synchronization Service, the selection of an active synchronization master control 13 from the set of instances must be done through an internal agreement (election). This is the only place in the entire system where the synchronization service 10 cannot be used for such a purpose. However, in this case, the problem occurs in a very specific context and can be solved in a specific way (for example, by using a bully algorithm for a distributed election as described in Elections in a Distributed Computing System by H. Garcia-Molina, IEEE Trans. on Computers, (C-31,1), Jan. 1982).

Once the active synchronization master control 13 has been selected, the standby resorts to a monitoring mode in which it periodically polls the active instance until a failure is detected.

Since a standby is used, following a failure of the synchronization master control 13, its previous state must be reconstructed on the standby, preferably without involving the application program. This can be achieved through the information kept by the synchronization agents 14. As a consequence, except for slightly extended service times due to the recovering process, application programs are unaware of synchronization master control 13 failure.

## SYNC MASTER TASK

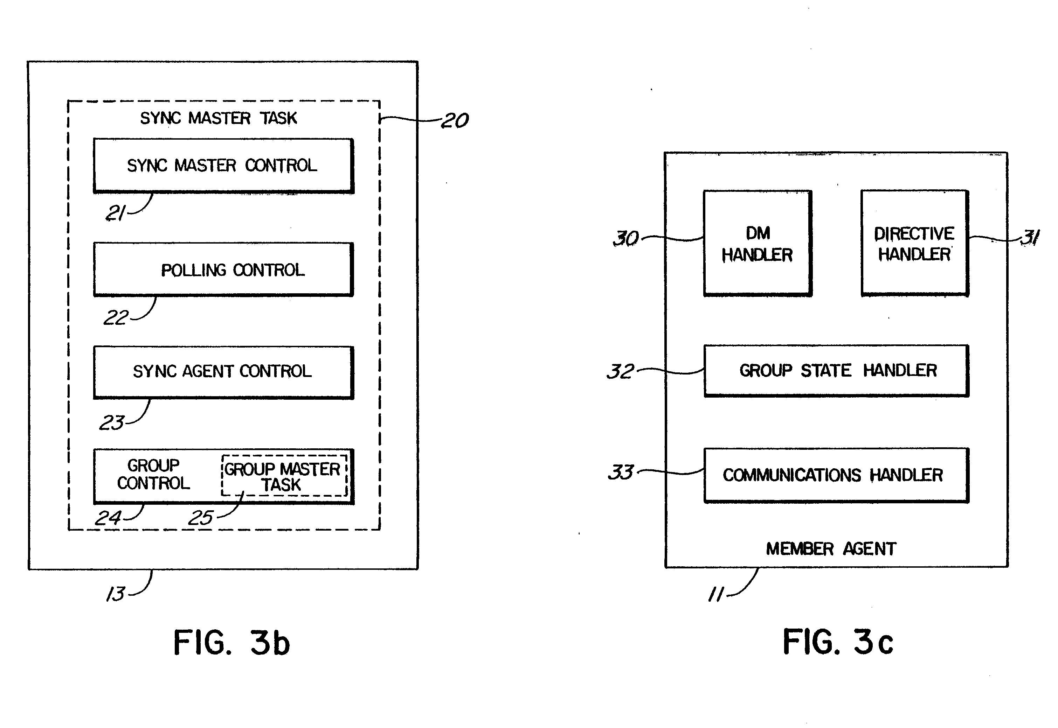

The Sync Master Task 20 is the root task (i.e. program) of the synchronization service 10 control hierarchy. It provides the central control point for all synchronization groups. It consists of four main subcomponents as depicted in Figure 3b and is located within synchronization master control 13. The four main subcomponents of the Sync Master Task 20 are as follows:

SYNC MASTER CONTROL 21 establishes and maintains the operational state of the Sync Master Task 20. This includes the Sync Master recovery algorithm. Sync Master Control 21 consists of the main procedure of the Sync Master Task 20.

POLLING CONTROL 22 is responsible for detecting failure of processing elements 12. This subcomponent sends periodic messages to all synchronization agents 14. If a reply is not received within a certain time interval (after several retries have been attempted) the corresponding processing element 12 is declared as failed and a notification is sent to all remaining synchronization agents 14. This subcomponent is implemented within the Sync Master Task 20.

SYNC AGENT CONTROL 23 deals with events which occur at the processing element 12 level. This subcomponent is responsible for activating newly-recovered synchronization agents 14 as well as for accepting notifications, from the synchronization agents 14, about the arrivals and departures of group members 18. These are then relayed to the appropriate Group Control 24. This subcomponent is also implemented within the Sync Master Task 20.

GROUP CONTROL 24 handles events which are relevant to one group. This includes the joining and departure of group members 18. The Group Control function is implemented by the Group Master Task 25. There is one such task 25 for each synchronization group. Tasks 25 are created dynamically by the Sync Master Task 20.

The tasks comprising the Sync Master Task 20 maintain a shared database 16 (Figure 1) which represents a snapshot of the current state of the synchronization service 10. This database is described later.

SYNCHRONIZATION AGENT

A synchronization agent 14 resides in the control program of each processing element 12 which requires synchronization service 10 and it is the sole representative of the Sync Master Task 20 in that processing element 12. The synchronization agent 14 has the following responsibilities:
-It accepts SYNCHRONIZE directives and creates corresponding member agents 11.
-It monitors the status of all active member agents 11 on its processing element 12 and detects their disappearance (spontaneous or planned).
-It notifies the synchronization master control 13 of all changes (arrivals and departures) of Member Agents 11 on its processing element 12.
The synchronization agent 14 is implemented by the Sync Agent Task which is part of the operating system 15 on the corresponding processing element 12.

The synchronization agents 14 are permanent representatives of synchronization master control 13 within their host processing element 12. They have three main purposes:

(1) Synchronization agents 14 are a focal point for controlling all member agents 11 within a single processing element 12. This reduces the load on synchronization master control 13 which simply sends common control information to synchronization agents 14 for distribution to local member agents 11.

(2) Synchronization agents 14 isolate member agents 11 from the effects of synchronization master control 13 failures. All communication between the synchronization master control 13 and Member Agents 11 is channeled through the synchronization agents 14. If the synchronization master control 13 is temporarily unavailable (due to failure), the synchronization agents 14 will hold member agent 11 messages destined for the synchronization master control 13 until the latter is reinstated. In this way failures of the synchronization master control 13 are masked from member agents 11 and hence the applications.

(3) Synchronization agents 14 participate in the recovery of the synchronization master control 13. When a synchronization master control 13 is being reinstated it can reconstruct its operational state simply by querying all the synchronization agents 14. This is much faster and more reliable than querying the member agents 11 since these are more dynamic and more numerous.

The synchronization master control 13 maintains a database 16 (Figure 1) which represents the current state of the synchronization service 10 within the system 15. The database can be accessed through two keys:
-by group identifier --for access to the data for a particular synchronization group, and
-by processing element identifier --for access to synchronization service components located on a particular processing element 12.

The basic structure used is the linked list of dynamically allocated control blocks, each block corresopnding to some synchronization service component. This represents a trade-off between the requirement to minimize storage costs and the need for fast access to the data.

The next section describes the operation of the internal mechanisms used to achieve the synchronization functions. In the following discussion the communication between member agents 11 is assumed to be reliable; i.e., it is non-lossy, non duplicating, and order preserving. If the communication medium is unreliable an underlying reliable communication service provided within the distributed operating system can be used.

Rights are a set of shared objects within each synchronization group; each right can be free or assicated with at most one member 18. One example of a right is a database lock whereby only one user at a time can write to a database and no one else can read or write at that time. See also the "Update" right referred to later.

Rights are distributed in a centralized fashion since that minimizes overhead and complexity. In principle, this can be done by any member agent 11. For convenience, the control and distribution of rights are performed by the distinguished member (one of the members 18). The distinguished member 18 already has the uniqueness and fault-tolerant properties which are also required by the controller for rights. Thus, the Member 18 selected as the distinguished member has to perform this special function in addition to its standard synchronization functions. The selection of a distinguished member is done, by the synchronization master control 13, at the time the group is established (see below).

When a member 18 requires a right, its member agent 11 directs the request to the distinguished member 18. If the right is available, the distinguished member 18 will grant the right and inform the requesting member agent 11. If the right is already appropriated, then depending on the type of request made, the request is either queued by the distinguished member 18 or it is refused. In the first case, requests are handled on a first-come first-served basis.

Should the current distinguished member 18 fail, a new one is appointed by the synchronization master control 13 (which is also resonsible for detecting the failure). Of course, until a new distinguished member 18 is appointed, rights cannot be distributed or retrieved, but all the other synchronization services are still available. In order to minimize the effect of a distinguished member 18 failure, the state of rights is reconstructed to the point just prior to failure. Each member 18 keeps a list of all rights which it has appropriated as well as a list of all its outstanding rights requests. This information is then exchanged with the new distinguished member 18 which can then assume the same state as the previous distinguished member 18. The entire switchover process is transparent to the application program.

If a member 18 fails, the distinguished member will automatically release any rights held by that member 18 and also purge any queued requests generated by that member 18.

Member agent 11 is the main functional component of synchronization service 10 and is responsible for handling all directives initiated by the user. It performs four classes of functions as depicted in Figure 3c and as represented by the following:

The COMMUNICATIONS HANDLER 33 provides a reliable (order-preserving, non-lossy, non-duplucating) communications service between group members 18; in order to minimize deadlocks the communication mode used is asynchronous message passing. This function is required only if there is no reliable communications service present within the distributed operating system 15.

The GROUP STATE HANDLER 32 maintains a local version of the current state of all the other group members 18.

The DIRECTIVE HANDLER 31 provides the interface between user tasks (components of members 18) and the member agent 11.

The DM HANDLER 30 implements the distinguished member functionality and is active on only one member 18 of the group at a time. This member 18 is selected by the Group Master Task 25 (Figure 3b). The distinguished member 18 is responsible for allocation of rights as well as for broadcasting group status change notifications to all other members 18 of the group. (This information is received from the Group Master Task 25.)

Member agents 11 are created dynamically by the synchronization agent 14 in response to a SYNCHRONIZE directive (Primitive). They are also destroyed by the synchronization agent 14 after they have left the group or following a failure.

## Broadcasts and Acknowledgements

When an application program initiates a broadcast (via the GROUP-BROADCAST primitive), its local member agent 11 distributes the information to all other active member agents 11. It then accumulates acknowledgements until all active member agents 11 have replied after which the application program is notified (via the GRP-ACK reply signal).

If an element 12 fails before its acknowledgement is dispatched, the broadcasting member agent 11 will assume an implicit acknowledgement from that member so that failures will not disrupt the application.

## Group Establishment and Joining of New Members

A newly joining member 18 first informs the synchronization master control 13 (via its synchronization agent 14) of its intent to join the synchronization group. The synchronization master control 13 then determines if this is the first reported member of the group. If it is, then this Member 18 is designated as the distinguished member 18 and a notification is sent back. This establishes the group.

If the group is already established, synchronization master control 13 registers the new member 18 as being in the joining state and informs the group's distinguished member agent 11. Upon receiving this notification the distinguished member agent 11 broadcasts a join request to all member agents 11 on the list and waits for the corresponding group acknowledgement. The period between the broadcast of the join request and the full acknowledgement of that request by all joined member agents 11 is called the joining interval. During that time some member agents 11 will become aware of the new member agent 11 before others. This opens up the possibility that some messages broadcast within the group may bypass the partially synchronized member agent 11. If messages received by this member agent 11 are passed to the application program, then the application program function of this member 18 would not necessarily perceive the same sequence of group events as other members 18; it could miss some. Therefore, the new member agent 11 must acknowledge any messages received from other member agents 11 (in order to satisfy the acknowledgement requirement) but, once acknowledged, the messages are discarded; i.e. they are not passed on to the application (an exception is messages containing other joining or departure requests which are processed by the member agent 11 but still not relayed to the application). This mode of operation remains in effect until the join request is finally acknowledged by the entire group. At that point, the new member 18 informs its application that it is fully joined and switches to normal operation. The overall effect, as perceived by the application, is that the joining operation is atomic.

The handling of messages that were discarded during the joining interval is no different to the application program than the handling of messages missed by the member 18 while it was down; that is, once synchronized with the gruop, the application program must proceed to upgrade its functional state to be consistent with the functional states of other members 18. The best method for achieving this depends on the application program.

Departure of Members

The departure of a member 18 from a synchronization group occurs when the member 18 decides to unsynchronize or when the host processing element 12 fails. In the former case, the departing procedure is as follows: the synchronization group (i.e. agent 11) notifies the Sync Master Task 20 of its intention. This event is relayed, via the appropriate Group Master Task 25 (Figure 3b), to the distinguished member 18 of the group. The distinguished member 18 then broadcasts this information to all other group members 18. Note that there is one Group Master Task 25 for every synchronization group defined in service 10.

In the case of a processing element 12 failure, the failure is detected by the Polling Control 22 within Sync Master Task 20 (Figure 3b) and the same sequence as described above is executed.

If the departed member 18 was a distinguished member, Group Master Task 25 will first select a new distinguished member 18 and then proceed in the same manner as above.

The synchronization agents 14 are intermediaries between synchronization master control 13 and the member agents 11. Synchronization agents 14 are created and dispatched when their host processing element 12 is initialized. Upon creation they wait to be contacted by the synchronization master 13, if one exists. Any application level requests for synchronization are queued until an acknowledgement is received from synchronization master control 13.

During normal operation, the synchronization agents 14 serve as a relay point for communication between the synchronization master control 13 and the member agents 11. All communication is buffered until acknowledged by the receiver so that the Member Agents 11 are protected from temporary failures of synchronization master control 13. The synchronization agents 14 also extract and store any information relevant to the reestablishment of the synchronization master control 13.

Most of the operation of the synchronization master control 13 has already been described above. The only aspect remaining is the monitoring function.

The monitoring of the existence of processing elements 12 is done by the Polling Control 22 which polls each individual synchronization agent 14. The failure of a processing element 12 implies that the corresponding synchronization agent 14 is down as well as all member agents 11 that were present on that processing element 12. When that happens the synchronization master control 13 notifies all affected Group Master Tasks 25. These, in turn, inform their distinguished member agents 11 which then broadcast this information to other member agents 11.

Before we go any further, it may be advantageous to introduce the primitives used with synchronization service 10. The primitives can be split into two categories:

(1) Synchronous Primitives are in the form of request-reply pairs; member agents 11 submit requests for some action to be performed on their behalf and synchronization service 10 eventually matches these with appropriate replies.

(2) Asynchronous Notifications are spontaneous signals informing a member agent 11 about changes in the status of its group or conveying a message sent by some other member agent 11.

There are only two types of asynchronous notifications that can be sent to a member agent 11: -GROUP-CHANGE (group status) is sent when a new member 18 has joined or an active member 18 has departed from the group. The status information includes the complete new membership list and the id of the new distinguished member. -GROUP-MSG (message) signals the arrival of a message from some other member 18 (broadcast or point-to-point).

The application program must allow forms of communication (i.e. synchronous and asynchronous) although it may choose to handle asynchronous communications in a synchronous manner by ignoring them until the current activity sequence is complete.

The synchronous primitives and corresponding replies are depicted in chart form in Figure 3a, to which attention is directed.

The primitives are:

-SYNCHRONIZE (group-id)

This is directive which is issued by a member 18 (via its member agent 11) when it wishes to become synchronized with the group specified by <group-id>. If no group exists at the time, one is established. The only signal expected in reply to this directive is the SYNCH-DONE signal.

-SYNC-DONE (group-status)

This is a signal from the synchronization service 10 (i.e. member agent 11) in response to a successful synchronization of a member 18 following the invocation of the SYNCHRONIZE directive. The return parameter, <group status>, contains the same information about the status of the group as the GROUP-CHANGE primitive described below. It includes a <dm-flag> parameter which informs the member 18 if it is the bearer of the distinguished member status.

- UNSYNC

This directive is used when a member 18 decides to depart from its group. It ensures orderly deactivation.

-UNSYNC-DONE

This signal is a confirmation that the member 18 has been removed from its synchronization group.

-GROUP-CHANGE (group-status)

This is an asynchronous signal which is generated by the member agent 11 whenever a new member 18 joins the group or when a member 18 departs from the group. If this mmeber 18 is the new distinguished member as a result of the change, a <dm-flag> parameter in the <group-status> data record will be set appropriately. The treatment of this situation is left to the application program. The new status of the group is also returned.

-REQ-RIGHT (right-id, mode)

This directive is issued when a member 18 needs exclusive access to a group right. If the right is available, it is guaranteed to be granted to only one requesting member 18 (there may be multiple simultaneous requests for the same right). If the right is not available, then if the <mode> parameter specifie a "queued" request, it is queued until it can be serviced. Alternatively, if the <mode> parameter specifies "immediate" the request is refused since the right has already been appropriated by another member 18 of the group.

- R-GRANTED (right-id)

This signal informs a member 18 that it has been granted the required right.

-R-REFUSED (right-id)

This signal informs a member 18 which has requested a right, with the "immediate reply" mode specified in the request, that the right is not available. (If a queued request was made then this signal will never be generated.)

-REL-RIGHT (right-id)

This directive is used to release an appropriated right.

-R-RELEASED (right-id)

This signal is the reply to the REL-RIGHT directive.

-QRY-RIGHTS

This is a directive which is used to obtain a snapshot of the distribution of group rights among group members.

-R-STATUS (rights-status)

This is a reply signal to the QRY-RIGHTS directive. The <rights-status> parameter lists, for each group right, the member-id of the member which owns it, it any.

Note that service 10 cannot guarantee the currency of the returned information since changes in the distribution of rights can occur at any time.

-GRP-BRDCST (message)

This directive is used to broadcast a synchronization event (message) to all synchronized members 18. It is the responsibility of the synchronization service 10 (via member agent 11) to ensure that all members 18 receive the message. The <message> parameter can be used to timestamp the synchronization event. The higher level software is responsible for supplying this parameter as well as interpreting its functional significance.

-GROUP-ACK

This is an acknowledgement signal for the GRP-BRDCST directive. It signifies that all members 11 have received the latest broadcast message.

-SND-TO-MEM (message)

This directive is used to send a point-to-point message to another group member 18.

-MSG-ACK

This is an acknowledgement that the latest point-to-point message has been received by the destination member 18.

Before the invention is described further, it may be of value to give some brief examples of the application of the primitives.

The first example is the control of a standby configuration. In this configuration there are two or more distributed program components (i.e. members 18) each on a different processing element 12, each of which is equally capable of providing the necessary function. Only one should be active at any given time while the others are standing by, ready to be activated should the active one fail. Assuming that they are all part of the same synchronization group that the algorithm which each member 18 executes is the same (the synchronization service primitives are highlighted in capitals):
SYNCHRONIZE;
Wait for SYNC-DONE signal;
If not selected as the distinguished member then
Repeat
Listen for SYNC-CHANGE signals;
until selected as the distinguished member;
Execute funciton;

If a member 18 is not selected as the distinguished member following synchronization with the group, then it simply waits until it is designated as the distinguished member.

The next exampled concerns the updating of a replicated database, i.e. the same example mentioned in the Background of the Invention. In this case there are multiple instances of a database, each of which can initiate an update request as a result of external activity. Such requests will be called external to distinguish them from "shadow requests". Shadow request are copies of an external request which a member 18 sends to all other members 18 so that they can make the appropriate changes to their copies of the database. For brevity, the handling of any other requests except update requests is ignored.

The solution shown below uses the mutual exclusion feature of the synchronization group. A right, called the Update right, is defined. The holder of this right is the member 18 whose request will be honored; all other members 18 must withhold their requests and perform the shadow request sent by the holder of the right:

Solution A

Repeat
Wait for next request;
If external request then
begin
REQ-RIGHT (update);
While waiting for R-GRANTED
Handle any incoming shadow requests;
GRP-BRDCST (external request);
Handle external request;
REL-RIGHT (Update);
end
else
Handle shadow request;
until termination;
Note that the application program need not be concerned with spontaneous failures of other members 18 since that is handled by the synchronization service 10.

An important problem which must be handled by this application (i.e. Solution A, above) is the addition of new or recovering instances. These will not necessarily have the same .state as the others and therefore must be brought to the same functional level. The situation is complicated by the possibility that updates may be initiated at other instances whil the new instance is being upgraded. One method of dealing with this is for the new instance to appropriate the Update right to ensure that the state remains unchanged while it is being upgraded. The algorithm performed by a restarting instance is then:
SYNCHRONIZE;
Wait for SYNC-DONE signal;
REQ-RIGHT (Update);

While waiting for R-GRANTED
Discard any shadow requests received;
Obtain current copy of database;
REL-RIGHT (Update);

Following this, the normal request-processing algorithm described above (i.e. Solution A) is executed.

The current copy of the database is obtained from any other member 18 through an internal protocol using point-to-point messages (i.e. SND-TO-MEM directives). Instead of a copy of the entire database it may be more convenient to request an update log and then perform the updates missed while the member 18 instance was down.

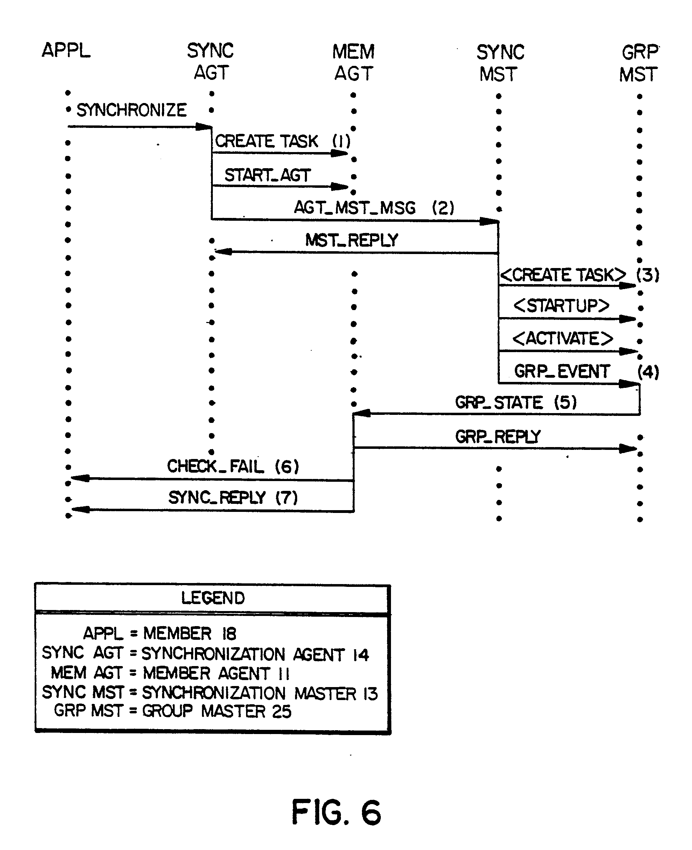

Figure 4 is a functional flow diagram representing the synchronization service 10 database 16 when accessed through the processing element 12 identifier.

The head and tail pointers (AGT-LST-HD and AGT-LST-TL) respectively, point to a linked list of synchronization agent control blocks (tAGT-CB) for those synchronization agents 14 involved.

There is one synchronization agent control block tAGT-CB for each processing element 12 which requires synchronization service 10. It contains a link (AGT-LST-LNK) to other synchronization agent control blocks tAGT-CB. This chain enables quick scanning of affected processing elements 12 when an entire block of processing elements 12 fails. Each synchronization agent control block tAGT-CB also contains a pointer (MMCB-LST-HD) to a chain of member agent control blocks (tMEM-CB) which reside on that processing element 12. Through this chain it is possible to detect quickly all synchronization groups which are affected by the failure of a processing element 12. Whereas all other chains in the synchronization service database 16 remain unchanged once they are established, this chain follows the dynamics of member 18 joinings and departures.

In order to simplify searching and list maintenance, the last Sync Agent control block tAGT-CB in the list is a dummy block.

Each member agent control block tMEM-CB corresponds to one member 18 of one synchronization group. Among other data, this control block contains a pointer (not shown in the diagram) to the corresponding synchronization agent control block tAGT-CB. This link allows quick reconfiguring of the processing element-Member Agent chain when necessary.

Figure 5 is a functional flow diagram representing the synchronization service database 16 when accessed through the unique group identifier.

GRP-HDR [gropu id] is a static array of pointers. Each item of the array points to a circular list of member agent control blocks (tMEM-CB of which belong to the same synchronization group.

The member agent control blocks tMEM-CB are linked into a circular list to facilitate selection of a distinguished member. This list grows as members 18 are added to the synchronization group, each successive block identified by the next available positive integer (MEM-ID). This integer corresponds to the member 18 identifier.

ACTION SEQUENCES

This section describes various action sequences within synchronization service 10. A diagrammatic representation is used to show these sequences. The following conventions are used.

• A full horizontal line indicates a message or rendezvous between two components (i.e. programs or tasks):

```
COMP1                    COMP2

  •                        •

  •        signal          •

  |——————————————————————▶ •
```

where signal is the name of the entry procedure in component COMP2 which accepts the signal. COMP1 is the component which sent the signal.

• a vertical line (1) following the reception of a signal indicates processing within the appropriate component which received the signal. This processing results in one or more signals being dispatched to other components:

```
              ┌──▶
              │        signal-1
              │
   signal-2   │——————————————————▶
  ◀———————————┘
              •
```

• If an asterisk (*) appears next to a signal it implies that the signal may be repeated (to different destinations).

• A signal which is enclosed in braces (e.g.,<signal> indicates that the signal is not mandatory and may be omitted depending on circumstances.

• Bracketed numbers in the Figures (e.g. (1)) designate explanatory notes which contain textual descriptions pertaining to various signals. The notes are given in the text relating to the relevant Figure. As it is believed that the Figures are self-explanatory, only brief comments will be made regarding the figures.

Joining of New Members

An "empty" synchronization group is one in which no members 18 are active. When the first member 18 joins, it is designated as the distinguished member by default. Figure 6 depicts a member 18 joining an empty group. The sequence of events is as depicted in Figure 6, to which attention is directed. The abbreviations used in the Figures are as follows: APPL means an application task; SNYC AGT means the synchronization agent task; MEM AGT means the member agent task; SYNC MST menas the synchronization master task 20; GRP MST means the Group Master Tast 25; MEM AGT (DM) means the distinguished member agent task; APPL (DM) means the application task which corresponds to the distinguished member agent.

The following notes refer to the bracketed numbers in Figure 6.

Notes:

(1) The Sync Agent will create a member agent task only if it had not existed previously, otherwise it will REINIT a previously created task instance. The START-AGT signal which follows initialization is used to pass initial data to the member agent 11.

(2) The AGT-MST-MSG signal to the sync master 13 contains the complete information about all member agents 11 on this processing element 12, including the newly-created member 18. (This ensures state convergence even in the presence of design faults.) The MST-REPLY message is used for positive acknowledgement so that the Sync Agent can send the next message to the Sync Master if it has one. (Only one outstanding message is allowed between the Sync Master and a Sync Agent.)

(3) If this group has not previously existed, a new Group Master is created. In that case a STARTUP signal follows to pass initial data to the Group Master Task, and an ACTIVATE signal is used to force it into an operational mode. If the group had existed previously (but had lost all its members) the existing Group Master Task is used.

(4) Once the Group Master has been activated, a GRP-EVENT signal is sent by the Sync Master informing it of the joining of the first member.

(5) Upon receipt of the GRP-EVENT signal, the Group Master selects the newly-created member agent 11 as the distinguished member and sends it a GRP-STATE signal. This signal establishes a connection between the Group Master and the Distinguished Member. All subsequent GRP-STATE signals are sequenced to ensure proper event ordering as well as to guard against communication failures. The GRP-REPLY signal is used to acknowledge one or more GRP-STATE signals and provides reliable communication.

The GRP-STATE signal contains the complete new state of the group rather than just information about the changes. This ensures that the system will converge to the true state even in the presence of design faults.

(6) The CHECK-FAIL signal is used to poll the application task to detect unexpected failures of the application. The application task never receives this signal; however, should the task fail, the member agent task will be notified by the underlying operating system kernel.

(7) The SYNC-REPLY signal contains a reply code of SYNC-DONE.

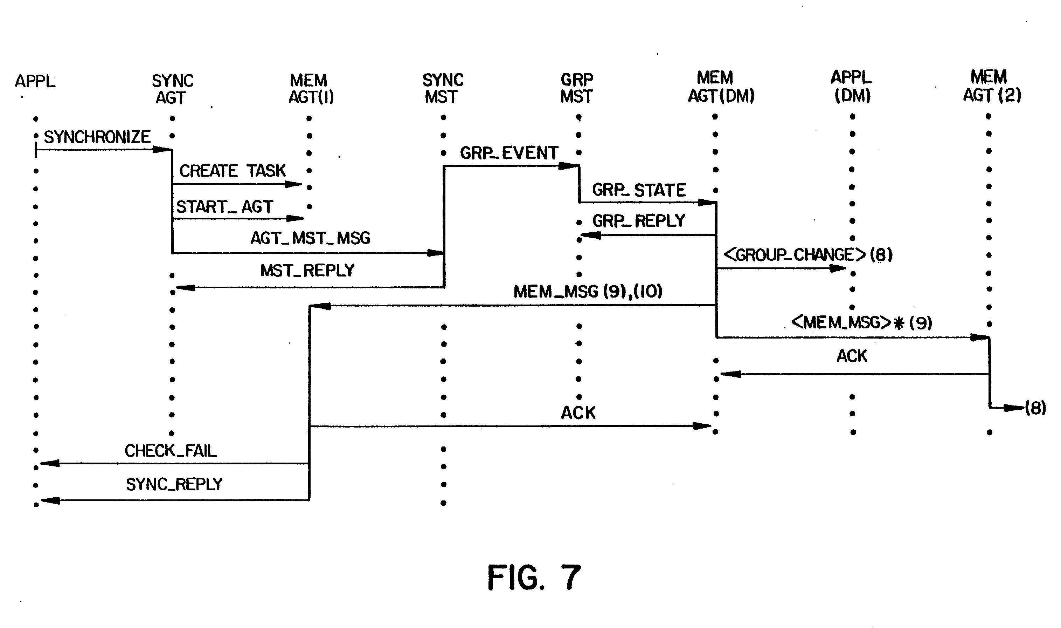

Figure 7 depicts the sequence for joining an existing synchronization group; the Group Master Task already exists, and the distinguished member is used to notify (broadcast) the other members 18 of the presence of a new member 18.

Notes:

(8) If the application has so requested, a GROUP-CHANGE signal is sent by each member agent 11 to the application whenever it detects a change in status of the group. In the case of the distinguished member the status change is gleaned from the GRP-STATE signal.

(9) When the distinguished member receives a GRP-STATE signal which indicates a group change (not all do), it broadcasts the new state to all other group members 18 using a MEM-MSG signal. Each member 18 acknowledges such messages with an ACK signal to provide reliable communication.

(10) When the newly-joining member 18 receives its MEM-MSG from the distinguished member it will send a SYNC-REPLY signal to the application (instead of a GROUP-CHANGE signal).

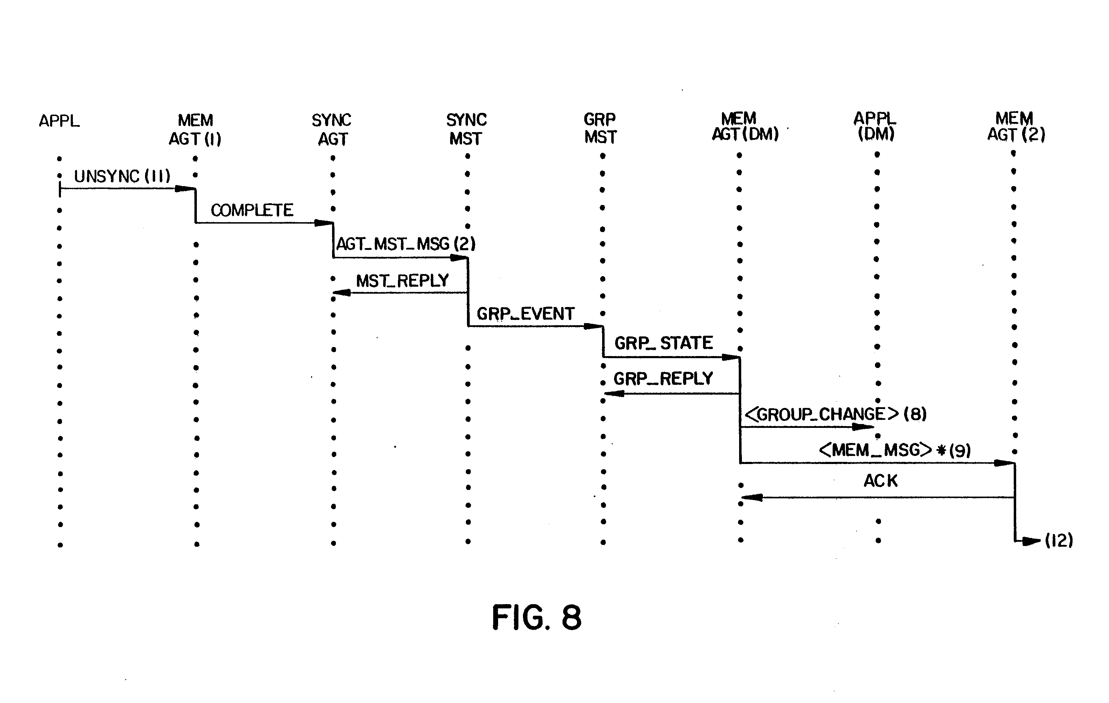

The control flow for the departure of a member 18 is shown in Figure 8. Note that the case of a processing element 12 failure is not shown here but is instead treated separately.

Notes:

(11) The sequence shown here corresponds to a voluntary departure initiated by the application program issuing an UNSYNC directive. This results in the member agent task terminating which, in turn, sends a COMPLETE signal to the parent task, the Sync Agent. The sequence is similar in situations where the departure is not voluntary:

-When the application task fails, the member agent 11 is notified (through the failure of the CHECK-FAIL message) which results in the termination of the member agent task (and consequently, raising of the COMPLETE signal).

-If the member agent task itself fails, the Sync Agent is notified by the operating system kernel with a COMPLETE signal.

(12) Indicates a <GROUP-CHANGE> signal to an application task not shown in the Figure.

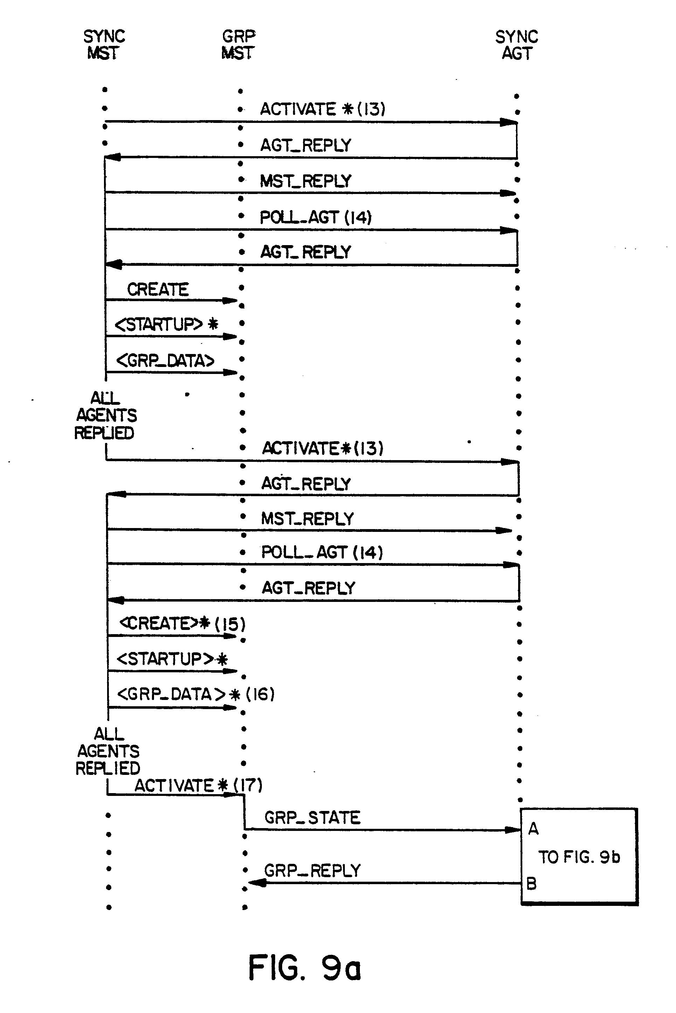

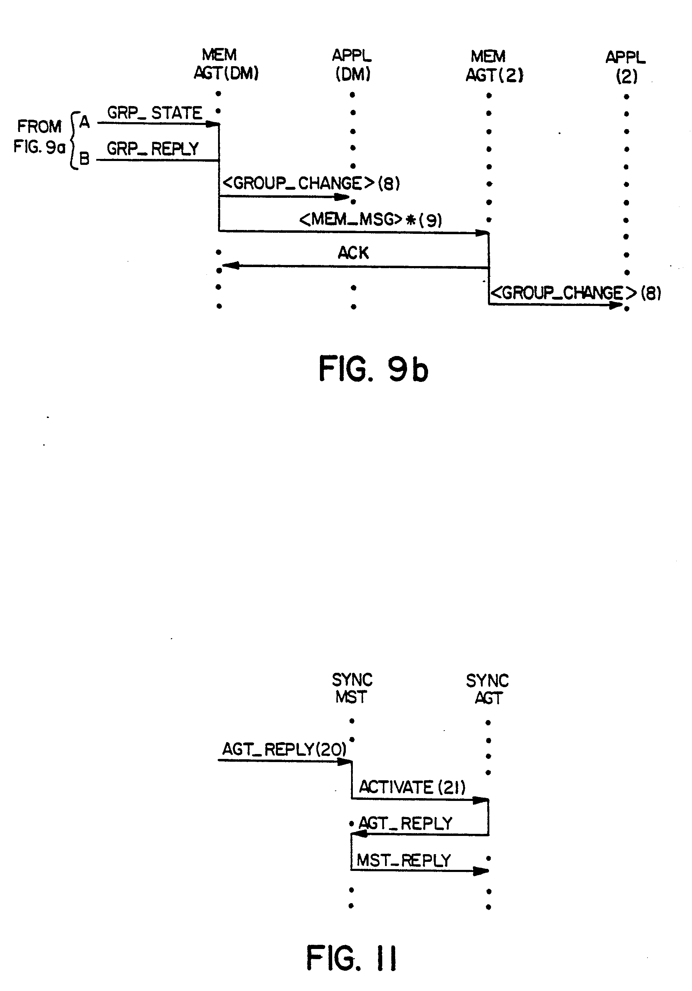

Figures 9a and 9b together depict the recovery of the synchronization master control 13 (i.e. Sync Master). The most general case is considered, i.e. the case of a running synchronization service 10 with active synchronization groups. This includes, as a subset, the case of a "cold" start.

Notes:

(13) Upon activation, Sync Master sends an ACTIVATE signal to each configured Sync Agent. The Sync Agent, whether they are already active or not, will respond with an AGT-REPLY message which includes a list of all member agents supported on that processing element. (The MST-REPLY signal is used for acknowledgement: refer to Figure 6.)

(14) Following activation of the Sync Agent, the Polling Control subcomponent 22 of Sync Master Control sends a POLL-AGT message to which the Sync Agent responds with an AGT-REPLY message. This exchange is repeated periodically to detect outages of the processing element.

(15) A Group Master is initiated only the first time a group is encountered. Refer to Figure 6 for further details on Group Master initiation.

(16) Before activating a Group Master, it is provided with data regarding the status of its members through GRP-DATA signals. Each signal contains the information for one member agent of one group. (This info is obtained from the AGT-REPLY messages.) In this way, the Group Master reconstructs the status of its group.

(17) After all Sync Agents have responded, the reconstruction is complete and an ACTIVATE signal is sent to all Group Masters. The Group Masters respond by sending a GRP-STATE signal to all distinguished members. Since this signal contains the complete group state, any group changes that might have occurred while the Sync Master was down are detected.

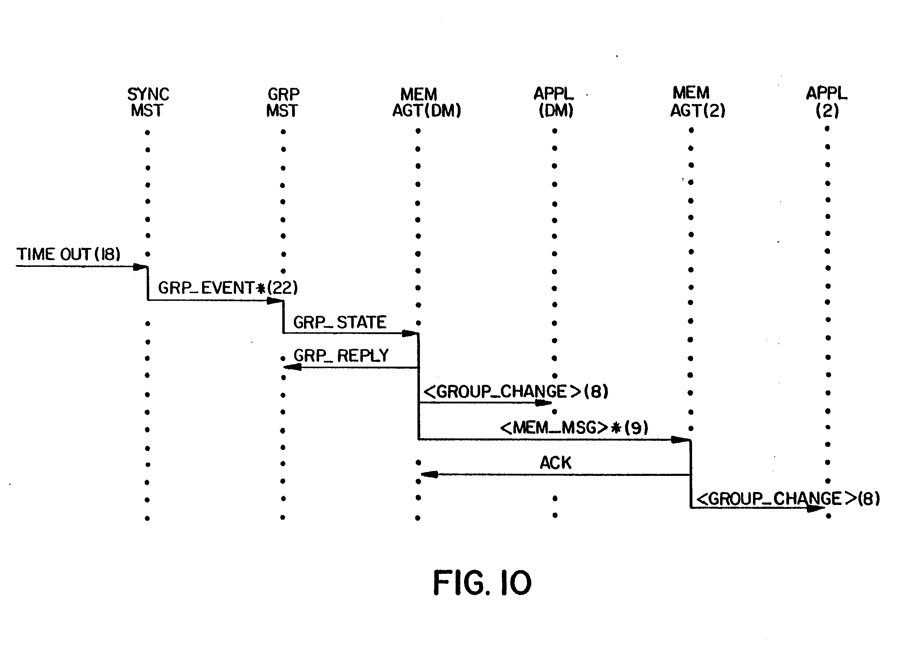

Figure 10 depicts the procedure for handling the failure of a processing element 12 which contains a synchronization agent 14 (Sync Agent).

Notes:

(18) The Sync Master detects a failure of a processing element when a TIME__OUT event is received. This means that a Sync Agent has not responded to a poll.

(19) For each group affected by the processing element failure, the Sync Master will send a GRP-EVENT signal to the respective Group Master.

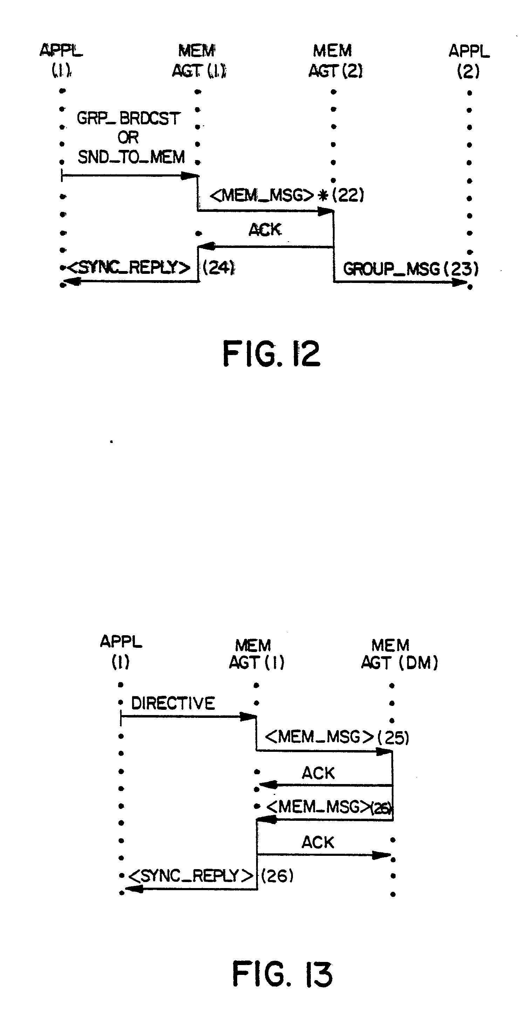

Figure 11 depicts the procedure for the recovery of a processing element 12 which is part of synchronization service 10. Note that the recovery of processing element 12 does not extend to recovering member agent 11 tasks. It is assumed that these will be recovered when the application tasks (i.e. programs) which use them are restarted. Thus, the only action to recover a process element 12 is to integrate the sync agent 14 with the rest of synchronization service 10.

Notes:

(20) When a previously failed Sync Agent finally responds to a POLL__AGT signal, the Sync Master initiates the recovery procedure.

(21) The Sync Master registers the new processing element 12 and sends an ACTIVATE signal to the Sync Agent on that processing element 12 (Refer to Figure 9a for a more detailed description of the activation sequence).

Figure 12 depicts the procedure for member 18 to member 18 messages. This procedure (protocol) is used both for group broadcasts and point-to-point messages between members 18.

Notes:

(22) In case of a broadcast, a copy of the message is sent to each member 18. If the member 18 is not active, the message is not sent.

(23) Upon receiving a MEM-MSG signal which indicates an application-level message the message is relayed to the application task responsible for receiving asynchronous messages.

(24) A SYNC-REPLY (codes: GRP-ACK or MSG__ACK) signal is sent back to the originator.

Figure 1 depicts the procedure employed in the processing of all directives which require distinguished member intervention (rights handling directives).

Notes:

(25) If the request is made on the distinguished member site, then no message is sent.

(26) A reply signal (MEM-MSG followed by a SYNC-REPLY to the application).

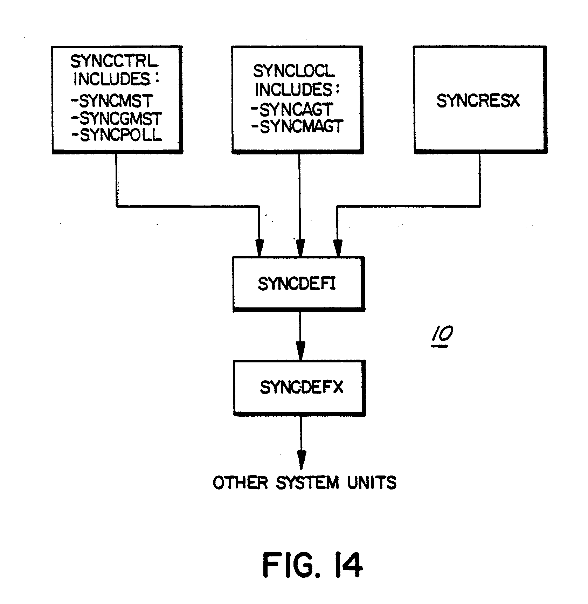

In one implementation made by the inventors, the code for synchronization service 10 was contained in ten files which were distributed into six units, the useage dependencies (and compilation order) of which are shown in Figure 14.

Notes:

SYNCCTRL contains the stub of the Sync Master unit and directives to include three files (SYNCMST, SYNCGMST, and SYNCPOLL) which implement the Sync Master function. It also contains the definitions required for the master database 16. SYNCMST is an "include" file which contains the code for the Sync Master Task.

SYNCGMST is an "include" file which contains the code for the Group Master Task.

SYNCPOLL contains the Polling Control 22.

SYNCLOCL contains the stub of the Sync Agent unit as well as a definition of data and procedure objects shared by the Sync Agent Task and the Member Agent Tasks. It also contains directives to include two files (SYNCAGT, SYNCMAGT).

SYNCRESX contains the definition of the SYNCHRONIZE primitive. This unit must be loaded with the application code which uses the synchronization service.

SYNCDEFI contains a set of internal compile-object definitions for the synchronization service. This includes the definition of all entries used for communication between synchronization service components which are hidden from user programs. Since this file contains only compile objects it is not loaded.

SYNCDEFX contains a definition of all compile-objects which are exported by the synchronization servie to its users. Since this file contains only compile objects it is not loaded.

Application tasks which use the synchronization service need to include SYNCRESX and SYNCDEFX in their useage lists.

Note that SYNCCTRl implements the function of synchronization master control 13 (Fig. 1), and that SYNCLOCL and SYNCRESX together implement the functions of member agent 11 and synchronization agent 14 (Fig. 1). The files SYNCDEFI and SYNCDEFX are not resident in the service; they can be thought of as tools used in the construction of the synchronization service but they are not themselves a part of it.

Simplified pseudocode listings for the main constituents of the invention follow as appendix I. They are believed to be self-explanatory. Any elaboration of the material is accomplished through the use of appended notes, to which attention is directed.

As a further aid to the understanding and to the use of the present invention the following (a copy of a "User's Reference" to the synchronization service of the present invention, as prepared by one of the inventors) is included as Appendix II. It will expand on the use of the present invention.

## Claims

1. A synchronization service [10] for use with a computer having a distributed operating system, to allow the construction of a customized synchronization scheme, for synchronizing the constituent portions of a distributed program, said service comprising:

a general set of application-independent synchronization primitives, whereby the construction of said customized synchronization scheme is achieved by the selective implementation of said application-independent synchronization primitives.

2. The synchronization service of claim 1 wherein said application-independent primitives comprise the following functions: synchronize; synchronize done; and unsynchronize.

3. The synchronization service of claim 2 wherein said primitives further comprise the following functions: request right; right granted; right refused; release right; group broadcast; and group acknowledge.

4. The synchronization service of claim 3 wherein said primitives further comprise the following functions: unsynchronize done; send to member; and message acknowledge.

5. A synchronization service [10] for use with a computer having an operating system [15] distributed over a plurality of processing elements [12], to allow the construction of a customized synchronization scheme, for synchronizing the constituent portions [18] of a distributed program, said service comprising:

a common synchronization master control means [13];

a synchronization agent means [14] for each processing element;

a plurality of application program components [18], each component located on a different processing element, each said component having associated therewith a member agent [11], said member agent being a program for interfacing with said synchronization agent means, and said synchronization agent means interfacing between said master control means and said member agent, whereby a customized synchronization scheme can be constructed based upon a general set of application-independent synchronization primitives contained in both said synchronization agent means [14] and said member agent [11] and accessed via said synchronization agent means.

6. The synchronization service of claim 5 wherein said application-independent primitives comprise the following functions: synchronize; synchronize done; and unsynchronize.

7. The synchronization service of claim 6 wherein said application-independent primitives further comprise the following functions: request right; right granted; right refused; release right; group broadcast; and group acknowledge.

8. A synchronization service [10] for use with a computer having an operating system [15] distributed over a plurality of processing elements, to allow the construction of a customized synchronization scheme, for synchronizing the constituent component of a distributed program, said service [10] comprising the steps of:

a) joining a program component [18] on a first processing element [12] to a group of existing program components [18] on at least a second processing element [12] so that each of the existing components is aware of the presence and location of the joining components;

b) informing each member of a group of physically distributed program components when one or more components which are members of said group, depart from it;

c) selecting, as a distinguished member, one program component from a group of distributed program components such that, within said group, there is never more than one said distinguished member; and

d) providing mutually exclusive rights to said group of distributed program components such that no more than one said component can appropriate a given right at any time.

9. The synchronization service of claim 8 further including the step of providing reliable point-to-point communication between said distributed program components on the basis of their internal group identifiers.

10. The synchronization service of claim 9 further including the step of providing a broadcast mechanism from any one program component to all other program components which are currently declared as being in the same group as the broadcasting component.

11. The synchronization service of claim 10 wherein said program components are components of an application program.

12. The synchronization service of claim 10 wherein said program components are components of an operating system program.

13. The synchronization service of claim 8 wherein said physical processing elements are logically distributed entities at one physical location.

14. A synchronization service [10], for use with a computer having an operating system [15] distributed over a plurality of processing elements [12], to allow the construction of customized synchronization schemes for synchronizing the constituent components [18] of a distributed program, said service comprising, as required, the steps of:

a) establishing a synchronization group for said distributed program, said group comprising at least one distributed program component [18];

b) joining a program component [18] to said group of existing program components so that each of the components is aware of the presence and the location of all the other components in said group;

c) informing each member of said group of distributed program components when one or more components which are members of said group, depart from it;

d) selecting, as a distinguished member for said group, one program component from said group of distributed program components such that, within said group, there is never more than one said distinguished member; and

e) providing mutually exclusive rights to said group of distributed program components such that no more than one said component can appropriate a given right at any time.

15. The synchronization service of claim 14 further including the step of providing full connectivity between all said distributed program components of said group.

16. The synchronization service of claim 15 wherein said distributed program is an application program.

17. The synchronization service of claim 15 wherein said distributed program is an operating system program.

18. The synchronization service of claim 15 wherein each said program component [18] is on a different processing element [12].

19. A synchronization service [10], for use with a computer having an operating system [15] distributed over a plurality of processing elements [12], to allow the construction of customized synchronization schemes for synchronizing the constituent components [18] of a distributed program, said service including a synchronization master control [13] comprising:

master control means [21] for activating said synchronization service;

polling means [22] for polling the processing elements [12] associated with said components of said distributed program so as to monitor the status of said processing element;

control means [24] for joining new members [18] to said group, and for handling departures of members [18] from said group; and

a database means [16] containing information representative of the current state of said synchronization service at a given point in time.

20. The synchronization service of claim 19 further including, at each said processing element, a synchronization agent [14] comprising:

means for accepting synchronization directives and for creating corresponding member agents; and

means for monitoring the status of all active member agents on said processing element and reporting same to said synchronization master control [13].

21. The synchronization service of claim 20 further including at each said processing element [12], a member agent [11] each synchronization group, comprising:

communications means [33] for providing a reliable communications service between program components [18];

storage means [32] for maintaining a local version of the current state of all other program components [18];

handler means [31] for providing the interface between user tasks and said member agent [11]; and

distinguished member means [30] for implementing the distinguished member function on only one program component [18] at any given time.

FIG. I

0 251 584

FIG. 2a

0 251 584

FIG. 2b

## SYNCHRONOUS PRIMITIVES

| REQUEST | REPLY |
|---------|-------|
| SYNCHRONIZE (group-id) | SYNC_DONE (group-status) |
| UNSYNC | UNSYNC_DONE |
| REQ_RIGHT (right-id, Immed) | R_GRANTED |
| | R_REFUSED |
| REQ_RIGHT (right-id, Queued) | R_GRANTED |
| REL_RIGHT (right-id) | R_RELEASED |
| QRY_RIGHTS | R_STATUS (rights-status) |
| GRP_BRDCST (message) | GRP_ACK |
| SND_TO_MEM (message) | MSG_ACK |

## ASYNCHRONOUS NOTIFICATIONS

| |
|---|
| GROUP-CHANGE (group-status) |
| GROUP-MSG (message) |

**FIG. 3a**

IBM PC-AT — 219

IBM LAN

226

IBM PC-AT    100a    IBM PC-AT

212a        212b

**FIG. 2c**

0 251 584

0 251 584

| AGT_LST_HD |
| AGT_LST_TL |

†AGT_CB

| |
| AGT_LST_LNK |
| MMCB_LST_HD |
| |

16

†AGT_CB

| |
| AGT_LST_LNK |
| |

†MEM_CB

| (GR_ID = i) |
| MMCB_LST_LNK |
| |

†MEM_CB

| (GR_ID = k) |
| MMCB_LST_LNK |
| |

## FIG. 4

GRP_HDR (group id)

| |
| : |
| |
| : |
| |

†MEM_CB

| (MEM_ID = 1) |
| GRP_LST_LNK |
| |

†MEM_CB

| (MEM_ID = n) |
| GRP_LST_LNK |
| |

## FIG. 5

FIG. 3c

DIRECTIVE HANDLER — 31
DM HANDLER — 30
GROUP STATE HANDLER — 32
COMMUNICATIONS HANDLER — 33
MEMBER AGENT — 11

FIG. 3b

SYNC MASTER TASK — 20
SYNC MASTER CONTROL — 21
POLLING CONTROL — 22
SYNC AGENT CONTROL — 23
GROUP CONTROL — 24
GROUP MASTER TASK — 25
13

APPL  SYNC AGT  MEM AGT  SYNC MST  GRP MST

SYNCHRONIZE

CREATE TASK (1)

START_AGT

AGT_MST_MSG (2)

MST_REPLY

<CREATE TASK> (3)

<STARTUP>

<ACTIVATE>

GRP_EVENT (4)

GRP_STATE (5)

GRP_REPLY

CHECK_FAIL (6)

SYNC_REPLY (7)

| LEGEND |
|---|
| APPL = MEMBER 18 |
| SYNC AGT = SYNCHRONIZATION AGENT 14 |
| MEM AGT = MEMBER AGENT 11 |
| SYNC MST = SYNCHRONIZATION MASTER 13 |
| GRP MST = GROUP MASTER 25 |

FIG. 6

FIG. 7

APPL

SYNC AGT

MEM AGT (I)

SYNC MST

GRP MST

MEM AGT (DM)

APPL (DM)

MEM AGT (2)

SYNCHRONIZE

CREATE TASK

START_ AGT

AGT_MST_MSG

MST_REPLY

GRP_EVENT

GRP_STATE

GRP_REPLY

<GROUP_CHANGE> (8)

MEM_MSG (9),(IO)

<MEM_MSG>* (9)

(8)

ACK

ACK

CHECK_FAIL

SYNC_REPLY

FIG. 8

APPL · MEM AGT (I) · SYNC AGT · SYNC MST · GRP MST · MEM AGT (DM) · APPL (DM) · MEM AGT (2)

UNSYNC (II)

COMPLETE

AGT_MST_MSG (2)

MST_REPLY

GRP_EVENT

GRP_STATE

GRP_REPLY

<GROUP_CHANGE> (8)

<MEM_MSG> * (9)

ACK

(I2)

FIG. 9a

FIG. 9b

FIG. II

FIG. 10

0 251 584

APPL
(1)

MEM
AGT (1)

MEM
AGT (2)

APPL
(2)

GRP_ BRDCST
OR
SND_TO_MEM

<MEM_MSG> * (22)

ACK

<SYNC_REPLY> (24)

GROUP_MSG (23)

## FIG. 12

APPL
(1)

MEM
AGT (1)

MEM
AGT (DM)

DIRECTIVE

<MEM_MSG> (25)

ACK

<MEM_MSG> (25)

ACK

<SYNC_REPLY> (26)

## FIG. 13

SYNCCTRL
INCLUDES:
-SYNCMST
-SYNCGMST
-SYNCPOLL

SYNCLOCL
INCLUDES:
-SYNCAGT
-SYNCMAGT

SYNCRESX

SYNCDEFI

*10*

SYNCDEFX

OTHER SYSTEM UNITS

FIG. 14